# EUROPEAN PATENT SPECIFICATION

(11) **EP 2 759 479 B1**
(45) Date of publication and mention of the grant of the patent: **15.03.2017**
(21) Application number: 11871956.6
(22) Date of filing: 15.09.2011
(51) Int. Cl.: B64D 47/08, F16M 11/12

(54) **DUAL-AXIS BALL HEAD FOR USE IN UNMANNED AERIAL VEHICLE, TRIPLE-AXIS BALL HEAD FOR USE IN UNMANNED AERIAL VEHICLE, AND MULTI-ROTOR AERIAL VEHICLE**
ZWEIACHSIGER KUGELKOPF ZUR VERWENDUNG IN UNBEMANNTEN FLUGKÖRPERN SOWIE DREIACHSIGER KUGELKOPF ZUR VERWENDUNG IN UNBEMANNTEN FLUGKÖRPERN UND FLUGKÖRPER MIT MEHREREN ROTOREN
TETE A ROTULE A DEUX AXES POUR UTILISATION DANS UN AERONEF SANS PILOTE, TETE A ROTULE A TROIS AXES POUR UTILISATION DANS UN AERONEF SANS PILOTE ET AERONEF MULTI-ROTORS

(30) Priority: 09.09.2011 CN 201110268445
(43) Date of publication of application: 30.07.2014
(73) Proprietor: SZ DJI Technology Co., Ltd., Hi Tech Park (South) Nanshan, Shenzhen (CN)
(72) Inventor: WANG, Tao, Nanshan District, Shenzhen Guangdong 518057 (CN)
(74) Representative: Appelt, Christian W.
(86) International application number: PCT/CN2011/079703
(87) International publication number: WO 2013/033924

(56) References cited:
- EP-A1- 1 227 671
- CN-A- 101 734 377
- CN-A- 101 811 578
- CN-U- 201 604 796
- CN-Y- 201 287 830
- CN-Y- 201 380 965
- FR-A1- 2 730 570
- GB-A- 2 464 147
- US-A- 4 752 791
- US-A- 5 426 476
- US-A- 5 966 991

## Description

### Field of the Invention

The present invention relates to the field of unmanned aerial vehicles, and particularly to a dual-axis platform for use in an unmanned aerial vehicle, a triple-axis platform for use in an unmanned aerial vehicle, and a multi-axis aircraft for purpose of aerial photography or surveillance.

### Background of the Invention

Unmanned aerial vehicles are characterized by a small size, small weight, low costs, flexible operation and high security performance, and can be widely used in various areas such as aerial photography, surveillance, search and rescue, and resource exploration. Since the unmanned aerial vehicle itself suffers from high frequency vibration and low frequency jitter, it needs to be equipped with an aerial photography stabilizing platform to carry a video camera or camera to achieve stable aerial photography. The aerial photography stabilizing platforms mostly detect posture changes of the video camera or camera via an electronic apparatus and control reverse compensation of a steering engine to stabilize the video camera or camera.

In the prior art, most of platforms employ mechanical gear driving to enable dual-axis, triple-axis or multi-axis rotation of the video camera or camera. Since gear transmission generally has a lag, when the unmanned aerial vehicle is in various postures such as turn, hover, rise, fall or tilt, the platform has a long response time, the steering engine adjusts slowly so that it is very difficult for the video camera or camera to adjust the angle timely to adapt to adjustment of postures of the unmanned aerial vehicle, which affects the image quality of the video camera or camera. Meanwhile, most of dual-axis or triple-axis platforms for the unmanned aerial vehicles are not stable enough, the camera shakes abruptly during change of postures of the unmanned aerial vehicle, and the influence exerted by low frequency shake or machine body tilt cannot be eliminated, so it is very difficult to shoot high quality images which can meet professional needs.

GB 2462147 describes a device for orientating a payload that has at least two degrees of freedom, preferably three degrees of freedom, a 3-RRR parallel spherical mechanism, both capable of rapidly orienting a payload such as a camera.

EP 122767 describes a stabilizing system for an image-producing means operated on a non-stable platform.

US 5966991 describes a simple rugged two degree-of-freedom spherical orienting device applicable to point payloads such as cameras, mirrors, lasers antennas and the like.

CN 201604796 describes an intelligent unmanned aerial vehicle.

### Summary of the Invention

Aspects of the invention are set out in the independent claims.

In order to solve the technical problem that poor stability of the unmanned aerial vehicle in the prior art reduces shooting quality of a shooting assembly, the present disclosure provides a dual-axis platform for use in an unmanned aerial vehicle, a triple-axis platform for use in an unmanned aerial vehicle, and a multi-axis aircraft.

The technical solution adopted by the present disclosure to solve the technical problem is as follows: a dual-axis platform for use in an unmanned aerial vehicle is constructed and characterized in that it comprises: a machine frame assembly, a transmission assembly and a shooting assembly, the machine frame assembly comprises a first bracket, a second bracket and a third bracket, the shooting assembly is fixed on the first bracket, the first bracket is rotatably arranged with the second.
bracket, and the second bracket is rotatably arranged with the third bracket; the transmission assembly comprises a first motor and a second motor, wherein the first motor drives the first bracket to rotate about its rotation axis relative to the second bracket, and the second motor drives the second bracket to rotate about its rotation axis relative to the third bracket; the dual-axis platform further comprises a linkage member having two free ends which are respectively rotatably arranged at two open ends of the second bracket, the linkage member being fixed on the third bracket via a fastener.

Disclosed herein is a dual-axis platform for use in an unmanned aerial vehicle, specifically, wherein the linkage member comprises a first link, a second link and a third link which are hingedly connected sequentially; one free end of the first link is hingedly arranged at one end of the second bracket, one free end of the third link is hingedly arranged at the other end of the second bracket; the middle portion of the second link is positioned on the third bracket via the fastener.

Disclosed herein is a dual-axis platform for use in an unmanned aerial vehicle, further comprising a mounting arm, one end of the mounting arm is fixed on the third bracket, the other end is provided with a positioning hole adapted for the fastener, and the second link is fixed on the mounting arm via the fastener.

Disclosed herein is a dual-axis platform for use in an unmanned aerial vehicle. Preferably, a stator of the first motor is fixed on the first bracket, and a rotor of the first motor is fixedly arranged with the second bracket; a stator of the second motor is fixed on the third bracket and a rotor of the second motor is fixedly arranged with the second bracket.

Disclosed herein is a dual-axis platform for use in an unmanned aerial vehicle. Preferably, the center of gravity of the first bracket and the shooting assembly falls on a rotation axis of the first bracket.

Disclosed herein is a dual-axis platform for use in an unmanned aerial vehicle. Preferably, the center of gravity of the first bracket, the second bracket and the shooting assembly as a whole falls on a rotation axis of the second bracket.

Disclosed herein is a triple-axis platform for use in an unmanned aerial vehicle, comprising a machine frame assembly, a transmission assembly and a shooting assembly, characterized in that: the machine frame assembly comprises a first bracket, a second bracket and a third bracket, the shooting assembly is fixed on the first bracket, the first bracket is rotatably arranged with the second bracket, and the second bracket is rotatably arranged with the third bracket; the transmission assembly comprises a first motor, a second motor and a third motor, wherein the first motor drives the first bracket to rotate about its rotation axis relative to the second bracket, the second motor drives the second bracket to rotate about its rotation axis relative to the third bracket, and the third motor drives the third bracket to rotate about its rotation axis Z relative to a connecting frame; the triple-axis platform further comprises a linkage member having two free ends which are respectively rotatably arranged at two open ends of the second bracket, the linkage member being fixed on the third bracket via a fastener.

Disclosed herein is a triple-axis platform for use in an unmanned
aerial vehicle. Specifically, the linkage member comprises a first link, a second link and a third link which are hingedly connected sequentially; one free end of the first link is hingedly arranged at one end of the second bracket, one free end of the thirdlink is hingedly arranged at the other end of the second bracket; the middle portion of the second link is positioned on the third bracket via the fastener.

Disclosed herein is a triple-axis platform for use in an unmanned aerial vehicle, further comprising a mounting arm, one end of the mounting arm is fixed on the third bracket, the other end is provided with a positioning hole adapted for the fastener, and the second link is fixed on the mounting arm via the fastener.

Also disclosed herein is a multi-rotor aircraft, comprising the triple-axis platform for use in an unmanned aerial vehicle, a multi-rotor mounting frame and a circuit device, the multi-rotor mounting frame comprises a base, at least three support arms inserted and fixed on the base, a rotor member fixed at one end of each support arm, and a plurality of support frames which are arranged extending along the base and used for positioning externally; the triple-axis platform for use in an unmanned aerial vehicle is fixedly arranged at the base through the connecting frame.

Also disclosed herein is a platform for use in an unmanned aerial vehicle, comprising a machine frame assembly, a transmission assembly and a shooting assembly, characterized in that: the machine frame assembly comprises a first bracket, a second bracket, a third bracket and a linkage member, the shooting assembly is fixed on the first bracket, the first bracket is rotatably arranged with the second bracket, the second bracket is rotatably arranged with the third bracket, and the linkage member and the second bracket form a four-link mechanism;
the transmission assembly comprises a first motor and a fourth motor, wherein the first motor directly drives the first bracket to rotate relative to the second bracket, and the fourth motor directly drives the linkage member to bring the second bracket to rotate relative to the third bracket.
Disclosed herein is a platform for use in an unmanned aerial vehicle. Specifically, the linkage member comprises a first link, a second link and a third link which are hingedly connected in such an order; one free end of the first link is hingedly arranged at one end of the second bracket, one free end of the third link is hingedly arranged at the other end of the second bracket; the second link is positioned on the third bracket via the fourth motor.

Disclosed herein is a platform for use in an unmanned aerial vehicle, further comprising a mounting arm, one end of the mounting arm is fixed on the third bracket, the other end is fixedly connected to a stator of the fourth motor; a rotor of the fourth motor is fixedly connected to the second link; or one end of the mounting arm is fixed on the third bracket, the other end is fixedly connected to the rotor of the fourth motor; the stator of the fourth motor is fixedly connected to the second link.

Disclosed herein is a platform for use in an unmanned aerial vehicle. Furthermore, the second bracket is in an open U shape, one free end of the first link and one free end of the third link are respectively rotatably disposed on two open ends of the second bracket.

Disclosed herein is a platform for use in an unmanned aerial vehicle. Furthermore, the machine frame assembly further comprises a connecting frame for external mounting, the transmission assembly further comprises a third motor; the third motor drives the third bracket to rotate relative to the connecting frame.

Disclosed herein is a platform for use in an unmanned aerial vehicle. Furthermore, the transmission assembly further comprises a second motor which directly drives the second bracket to rotate relative to the third bracket.

Embodiments of the disclosure can achieve the following advantages: the free ends of the linkage member are hingedly arranged on the second bracket to jointly form a parallelogram. According to principles of the parallelogram, when the second bracket rotates a certain angle relative to the third bracket, the linkage member rotates the same angle along with it without interfering with the movement trajectory of the second bracket; meanwhile the linkage member is fixed on the third bracket via a fastener, the linkage member provides effective support for the two open ends of the second bracket in a vertical direction, increases load and rigidity of the second bracket and effectively reduces deformation quantity when the second bracket has a larger load; meanwhile, reduces self weight of the second bracket and decreases a diameter of the second motor.

### Brief Description of Drawings

The present invention will be further exemplified with reference to figures and embodiments. In which,
Fig.1 is a structural schematic view of a dual-axis platform for use in an unmanned aerial vehicle according to a first embodiment of the present invention;
Fig.2 is exploded view 1 of a triple-axis platform for use in an unmanned aerial vehicle according to a second embodiment of the present invention;
Fig.3 is exploded view 2 of a triple-axis platform for use in an unmanned aerial vehicle according to a second embodiment of the present invention;
Fig.4 is exploded view 2 of a triple-axis platform for use in an unmanned aerial vehicle according to a second embodiment of the present invention;
Fig.5 is structural schematic view 1 of a triple-axis platform for use in an unmanned aerial vehicle according to a second embodiment of the present invention;
Fig.6 is structural schematic view 2 of a triple-axis platform for use in an unmanned aerial vehicle according to a second embodiment of the present invention;
Fig.7 is exploded view 1 of a multi-rotor aircraft according to a third embodiment of the present invention;
Fig.8 is exploded view 2 of a multi-rotor aircraft according to a third embodiment of the present invention;
Fig.9 is structural schematic view 1 of a multi-rotor aircraft according to a third embodiment of the present invention;
Fig.10 is structural schematic view 2 of a multi-rotor aircraft according to a third embodiment of the present invention;
Fig.11 is structural schematic view 1 of a platform for use in an unmanned aerial vehicle according to a fourth embodiment of the present invention;
Fig.12 is structural schematic view 2 of a platform for use in an unmanned aerial vehicle according to a fourth embodiment of the present invention;
Fig.13 is structural schematic view 3 of a platform for use in an unmanned aerial vehicle according to a fourth embodiment of the present invention;
Fig.14 is structural schematic view 4 of a platform for use in an unmanned aerial vehicle according to a fourth embodiment of the present invention;

**Listing of parts**

| | |
|---|---|
| 100 platform | 200 multi-rotor mounting frame |
| 1 shooting assembly | 2 first bracket |
| 3 first motor | 4 second bracket |
| 5 second motor | 6 third bracket |
| 7 third motor | 8 connecting frame |
| 9 positioning frame | 10 mounting arm |
| 11 positioning hole | 12 linkage member |
| 121 first link | 122 second link |
| 123 third link | 13 fastener |
| 21 base | 22 support arm |
| 23 rotor member | 24 support frame |
| 25 fourth motor | |

### Detailed Description of Preferred Embodiments

Specific embodiments of the present disclosure will be described in detail with reference to figures to make technical features, objects and effects of the present invention clearer to understand.

### Embodiment 1

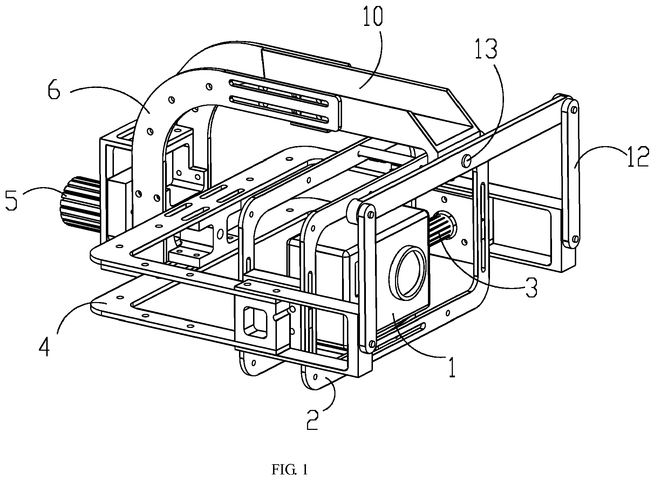

In an embodiment as shown in Fig.1, the present disclosure provides a dual-axis platform for an unmanned aerial vehicle, comprising a machine frame assembly, a transmission assembly and a shooting assembly 1. The machine frame assembly comprises a first bracket 2, a second bracket 4 and a third bracket 6, the shooting assembly 1 is fixed on the first bracket 2, the first bracket 2 is rotatably arranged with the second bracket 4, and the second bracket 4 is rotatably arranged with the third bracket 6. Here, the shape of the shooting assembly 1 is not limited to a square shape as shown in Fig.1, and it may be circular, oval, or in other shapes as commonly seen in the market. The transmission assembly comprises a first motor 3 and a second motor 5, wherein the first motor 3 drives the first bracket 2 to rotate about its rotation axis relative to the second bracket 4, and the second motor 5 drives the second bracket 4 to rotate about its rotation axis relative to the third bracket 6. A power source provided in the present embodiment is a motor. A small-sized motor as used has the following advantages: (1) the motor directly drives with less energy consumption, thereby saving energy and achieving environment protection; (2) the motor has a shorter response time and can timely and quickly adjust to adapt for various flying postures of the unmanned aerial vehicle so as to improve shooting stability of the shooting assembly. Two free ends of the second bracket 4 extend outward, the first bracket 2 and the shooting assembly 1 are integrally rotatably arranged between the two free ends; during rotation of the second bracket 4 driven by the second motor 5, the longer the length of the two free ends of the second bracket 4 is, the farther the center of gravity of the first bracket 2 and the shooting assembly 1 is away from a positioning point of the second bracket 4 so that the shaking of the second bracket 4 is stronger and the shooting assembly 1 is less stable. In order to reduce the shaking of the second bracket 4 and improve stability, as shown in Fig.1, the platform further comprises a linkage member 12 which two free ends are respectively rotatably arranged at two open ends of the second bracket 4, the linkage member 12 being fixed on the third bracket 6 via a fastener 13. In the present invention, the free ends of the linkage member 12 are hingedly arranged on the second bracket 4 to jointly form a parallelogram. According to principles of the parallelogram, when the second bracket 4 rotates a certain angle relative to the third bracket 6, the linkage member 12 rotates the same angle along with it without interfering with the movement trajectory of the second bracket 4; meanwhile the linkage member 12 is fixed on the third bracket 6 via a fastener 13, thereby providing support and positioning of the two open ends of the second bracket 4 and increasing stability of the second bracket 4. The free ends of the linkage member 12 are hingedly arranged on the second bracket 4 to jointly form a parallelogram. According to principles of the parallelogram, when the second bracket 4 rotates a certain angle relative to the third bracket 6, the linkage member 12 rotates the same angle along with it without interfering with the movement trajectory of the second bracket 4; meanwhile the linkage member 12 is fixed on the third bracket 6 via a fastener 13, and the linkage member 12 provides effective support for the two open ends of the second bracket 4 in a vertical direction, increases the load and rigidity of the second bracket 4 and effectively reduces deformation quantity when the second bracket 4 has a larger load, and meanwhile, reduces self weight of the second bracket 4 in respect of production process and decreases a diameter of the second motor 5.

On the basis of the above technical solution, specifically, the linkage member 12 comprises a first link 121, a second link 122 and a third link 123 which are hingedly connected sequentially; one free end of the first link 121 is hingedly arranged at one end of the second bracket 4, one free end of the third link 123 is hingedly arranged at the other end of the second bracket 4 so that the linkage member 12 and the second bracket jointly form a parallelogram. In order to position the parallelogram and improve its stability, a middle portion of the second link 122 is positioned on the third bracket 6 via the fastener 13.

Preferably, in order to enable a fixed connection between the linkage member 12 and the third bracket 6, as shown in Fig.1, it further includes a mounting arm 10, wherein one end of the mounting arm 10 is fixed on the third bracket 6, the other end is provided with a positioning hole 11 adapted for the fastener 13, and the second link 122 is fixed on the mounting arm 10 via the fastener 13.

In order to facilitate the motor adjusting its rotation angle timely, preferably a rotation axis X of the first bracket 2 is arranged perpendicular to a rotation axis Y of the second bracket 4. A stator of the first motor 3 is fixed on the first bracket 2, and a rotor of the first motor 3 is fixedly arranged with the second bracket 4, and the first motor 3 directly drives the second bracket 4 to bring the first bracket 2 to rotate relative to the second bracket 4. A stator of the second motor 5 is fixed on the third bracket 6 and a rotor of the second motor 5 is fixedly arranged with the second bracket 4, and the second motor 5 directly drives the second bracket 4 to bring the second bracket 4 to rotate relative to the third bracket 6.

Furthermore, to increase stability during the shooting of the shooting assembly 1, a center of gravity of the first bracket 2 along with the shooting assembly 1 falls on the rotation axis of the first bracket 2. Through mechanics analysis, when the center of gravity of the first bracket 2 and the shooting assembly 1 falls on the rotation axis X of the first bracket 2, the first bracket 2 rotates to any angle and does not generate rotation moment, i.e., the first bracket 2 will not shake to and fro due to the moment and thereby stability of the shooting assembly 1 during rotation is increased. When the unmanned aerial vehicle operates stably, namely, when motor driving is not needed, the first bracket 2 and the shooting assembly 1 are also in a dynamic balance state.

Likewise, it is found by mechanics analysis that in order to increase stability and prevent a whole assembly rotating about the Y axis from generating the rotation moment, preferably a center of gravity of the first bracket 2, the second bracket 4 and the shooting assembly 1 as a whole falls on the rotation axis of the second bracket 4, as shown in Fig.1.

On the basis of the above technical solution, preferably, the platform provided in the present embodiment is adapted for a small unmanned aerial vehicle for aerial photography and surveillance, and the first motor 3 and the second motor 5 each are preferably a DC brushless motor. Advantages for using the DC brushless motor in the unmanned aerial vehicle lie in that (1) electronic commutation, in place of conventional mechanical commutation, enables reliable performance, permanent wear resistance, a lower malfunction rate and an increased service life by about six times than a brush motor; (2) the DC brushless motor is a static motor with a small non-load current; (3) a high efficiency; (4) a small size.

Furthermore, the transmission assembly further comprises a circuit board, an inertia sensor, a microprocessor and a signal line, wherein the inertia sensor comprises a gyro for detecting an angular speed signal and an accelerometer for detecting an acceleration signal, the microprocessor controls positive rotation, reverse rotation and a magnitude of rotation speed of the first motor 3 and the second motor 5 according to the angular speed signal and the acceleration signal. The inertia sensor is set to monitor postures of the unmanned aerial vehicle timely and dynamically, control positive and reverse rotation of the motor quickly and timely so as to improve the shooting stability of the shooting assembly.

### Embodiment 2

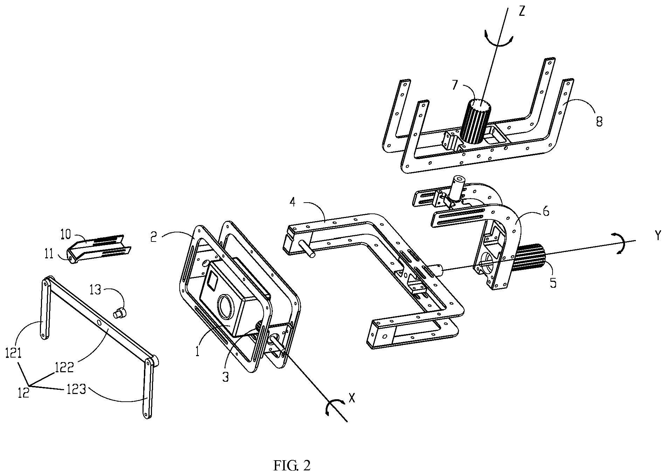

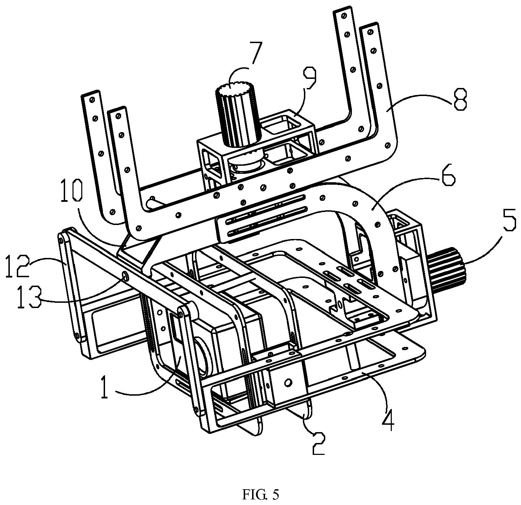

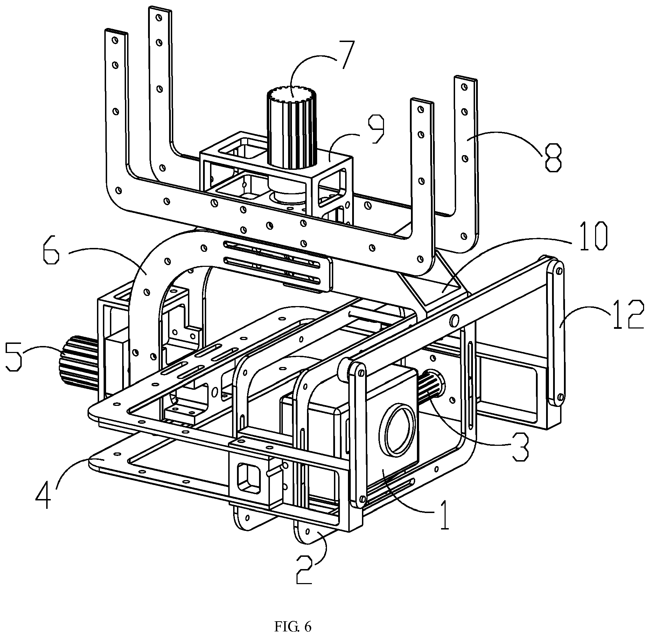

In another embodiment as shown in Figs.2-6, the present disclosure provides a triple-axis platform for use in an unmanned aerial vehicle, comprising a machine frame assembly, a transmission assembly and a shooting assembly 1. As shown in Fig.2, the machine frame assembly comprises a first bracket 2, a second bracket 4, a third bracket 6, and a connecting frame 8 for external mounting. The shooting assembly 1 is fixed on the first bracket 2. To allow the shooting assembly 1 to rotate along X axis (the rotation axis of the first bracket 2), the first bracket 2 is rotatably arranged with the second bracket 4. Such rotational structure can achieve rise or bow rotation of the shooting assembly 1. In order to adapt for left tilt or right tile flight of the unmanned aerial vehicle during flying, the shooting assembly 1 rotates to the right or to the left correspondingly to ensure stability of photo taking or video shooting. As shown in Figs.5 and 6, the second bracket 4 is rotatably arranged with the third bracket 6, leftward or rightward rotation of the second bracket 4 brings the first bracket 2 and the shooting assembly 1 to rotate wholly. To allow circumferential rotation of the shooting assembly 1 to perform rotatable shooting in a range of 360 degrees, the connecting frame 8 is fixed externally to a helicopter or a multi-rotor aircraft, and the third bracket 6 may rotate about a Z axis relative to the connecting frame 8. The transmission assembly comprises a first motor 3, a second motor 5 and a third motor 7, wherein the first motor 3 drives the first bracket 2 to rotate about its rotation axis relative to the second bracket 4, the second motor 5 drives the second bracket 4 to rotate about its rotation axis relative to the third bracket 6, and the third motor 7 drives the third bracket 6 to rotate about its rotation axis Z relative to the connecting frame 8. A power source provided in the present embodiment is a motor. A small-sized motor as used has the following advantages: (1) the motor directly drives with less energy consumption, thereby saving energy and achieving environment protection; (2) the motor has a shorter response time and can timely and quickly adjust to adapt for various flying postures of the unmanned aerial vehicle so as to improve shooting stability of the shooting assembly. As shown in Fig.2, Fig.3 and Fig.4, two free ends of the second bracket 4 extend outward, the first bracket 2 and the shooting assembly 1 are integrally rotatably arranged between the two free ends; during rotation of the second bracket 4 driven by the second motor 5, the longer the length of the two free ends of the second bracket 4 is, the farther a center of gravity of the first bracket 2 and the shooting assembly 1 is away from a positioning point of the second bracket 4 so that the shaking of the second bracket 4 is stronger and the shooting assembly 1 is less stable. In order to reduce the shaking of the second bracket 4 and improve stability, as shown in Fig.2, Fig.3 and Fig.4, the platform further comprises a linkage member 12 which two free ends are respectively rotatably arranged at two open ends of the second bracket 4, the linkage member 12 being fixed on the third bracket 6 via a fastener 13. In the present invention, the free ends of the linkage member 12 are hingedly arranged on the second bracket 4 to jointly form a parallelogram. According to principles of the parallelogram, when the second bracket 4 rotates a certain angle relative to the third bracket 6, the linkage member 12 rotates the same angle along with it without interfering with the movement trajectory of the second bracket 4; meanwhile the linkage member 12 is fixed on the third bracket 6 via the fastener 13, thereby providing supporting and positioning for the two open ends of the second bracket 4 and increasing stability of the second bracket 4. The free ends of the linkage member 12 are hingedly arranged on the second bracket 4 to jointly form a parallelogram. According to principles of the parallelogram, when the second bracket 4 rotates a certain angle relative to the third bracket 6, the linkage member 12 rotates the same angle along with it without interfering with the movement trajectory of the second bracket 4; meanwhile the linkage member 12 is fixed on the third bracket 6 via the fastener 13, and the linkage member 12 provides effective support for the two open ends of the second bracket 4 in a vertical direction, increases the load and rigidity of the second bracket 4 and effectively reduces deformation quantity when the second bracket 4 has a larger load, and meanwhile, reduces self weight of the second bracket 4 in respect of production process and decreases a diameter of the second motor 5.

On the basis of the above technical solution, specifically, as shown in Fig.2, the linkage member 12 comprises a first link 121, a second link 122 and a third link 123 which are hingedly connected sequentially; one free end of the first link 121 is hingedly arranged at one end of the second bracket 4, one free end of the third link 123 is hingedly arranged at the other end of the second bracket 4 so that the linkage member 12 and the second bracket 4 jointly form a parallelogram. In order to position the parallelogram and improve its stability, a middle portion of the second link 122 is positioned on the third bracket 6 via the fastener 13.

Preferably, in order to enable a fixed connection between the linkage member 12 and the third bracket 6, as shown in Fig.2, Fig.3 and Fig.4, it includes a mounting arm 10, one end of the mounting arm 10 is fixed on the third bracket 6, the other end is provided with a positioning hole 11 adapted for the fastener 13, and the second link 122 is fixed on the mounting arm 10 via the fastener 13.

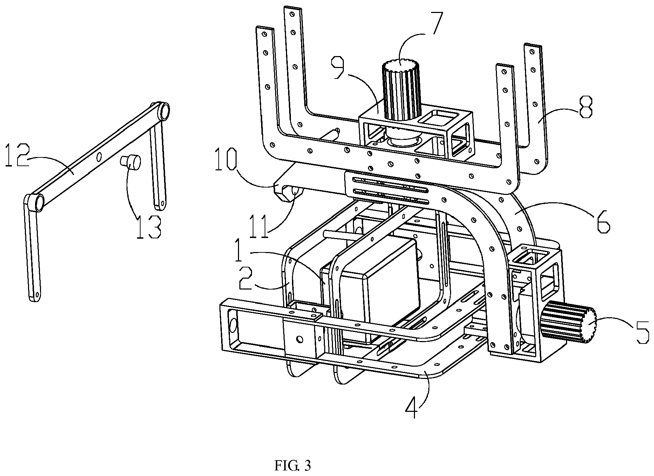

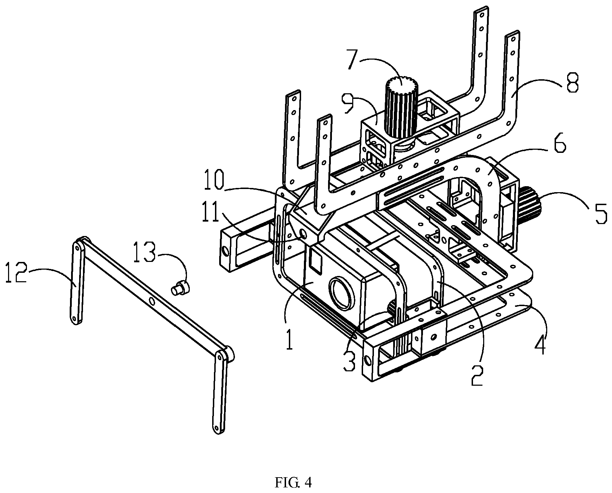

Preferably, a rotation axis X of the first bracket 2, a rotation axis Y of the second bracket 4 and a rotation axis Z of the third bracket 6 are arranged perpendicular to one another. As shown in Fig.3 and Fig.4, a stator of the first motor 3 is fixed on the first bracket 2, and a rotor of the first motor 3 is fixedly arranged with the second bracket 4, and the first motor 3 directly drives the second bracket 4 to bring the first bracket 2 to rotate relative to the second bracket 4. As shown in Fig.5 and Fig.6, a stator of the second motor 5 is fixed on the third bracket 6 and a rotor of the second motor 5 is fixedly arranged with the second bracket 4, and the second motor 5 directly drives the second bracket 4 to bring the second bracket 4 to rotate relative to the third bracket 6. As shown in Fig.5 and Fig.6, a stator of the second motor 7 is fixed on the connecting frame 8, a rotor is fixedly connected to the third bracket 6, and the third motor 7 directly drives the third bracket 6 to bring the third bracket 6 to rotate about the Z axis relative to the connecting frame 8. A positioning frame 9 is fixedly disposed on the connecting frame 8 to position the third motor 7.

Furthermore, to increase stability during the shooting of the shooting assembly 1, a center of gravity of the first bracket 2 and the shooting assembly 1 falls on the rotation axis of the first bracket 2. Through mechanics analysis, when the center of gravity of the first bracket 2 and the shooting assembly 1 falls on the rotation axis X of the first bracket 2, the first bracket 2 rotates to any angle and does not generate a rotation moment, i.e., the first bracket 2 will not shake to and fro due to the moment and thereby stability of the shooting assembly 1 during rotation is increased. When the unmanned aerial vehicle operates stably, namely, when motor driving is not needed, the first bracket 2 and the shooting assembly 1 are also in a dynamic balance state.

Likewise, it is found by mechanics analysis that in order to increase stability and prevent a whole assembly rotating about the Y axis from generating the rotation moment, preferably a center of gravity of the first bracket 2, the second bracket 4 and the shooting assembly 1 as a whole falls on the rotation axis of the second bracket 4, as shown in Fig.1.

Likewise, in order to prevent a whole assembly rotating about the Y axis from generating the rotation moment, a center of gravity of the first bracket 2, the second bracket 4, the third bracket 6 and the shooting assembly 1 as a whole falls on the rotation axis Z of the third bracket 6, as shown in Fig.5 and Fig.6.

On the basis of the above technical solution, preferably, the platform provided by the present embodiment is adapted for a small unmanned aerial vehicle for aerial photography and surveillance, and the first motor 3 and the second motor 5 each are preferably a DC brushless motor. Advantages for using the DC brushless motor in the unmanned aerial vehicle lie in that (1) electronic commutation, in place of conventional mechanical commutation, achieves reliable performance, permanent wear resistance, a lower malfunction rate and an increased service life by about six times than a brush motor; (2) the DC brushless motor is a static motor with a small non-load current; (3) a high efficiency; (4) a small size.

Furthermore, the transmission assembly further comprises a circuit board, an inertia sensor, a microprocessor and a signal line, wherein the inertia sensor comprises a gyro for detecting an angular speed signal and an accelerometer for detecting an acceleration signal, the microprocessor controls positive rotation, reverse rotation and a magnitude of rotation speed of the first motor 3 and the second motor 5 according to the angular speed signal and the acceleration signal. The inertia sensor is set to monitor postures of the unmanned aerial vehicle timely and dynamically, and control positive and reverse rotation of the motor quickly and timely so as to improve the shooting stability of the shooting assembly.

### Embodiment 3

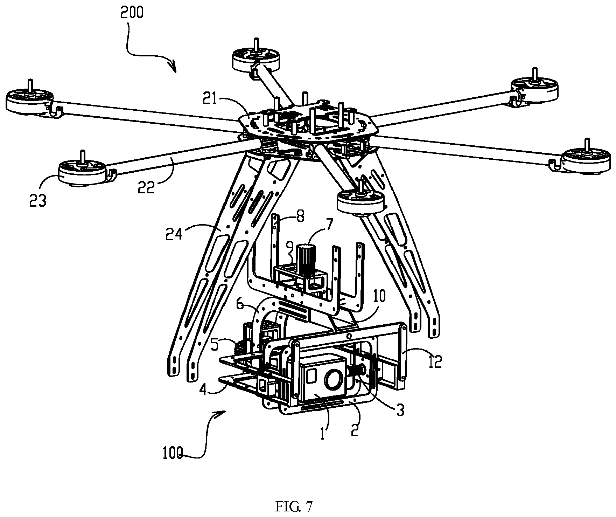

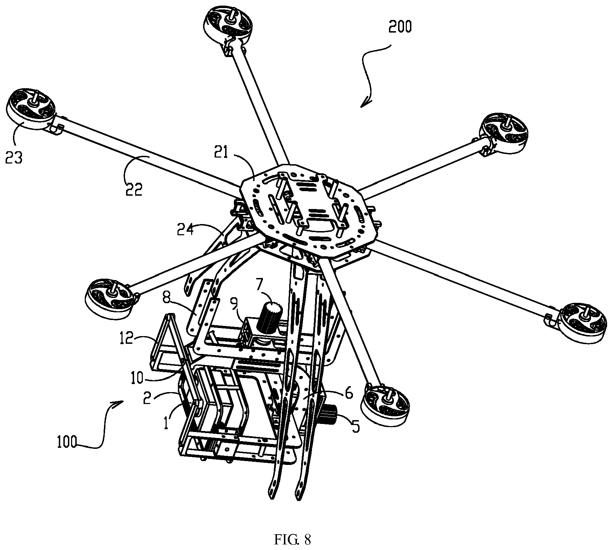

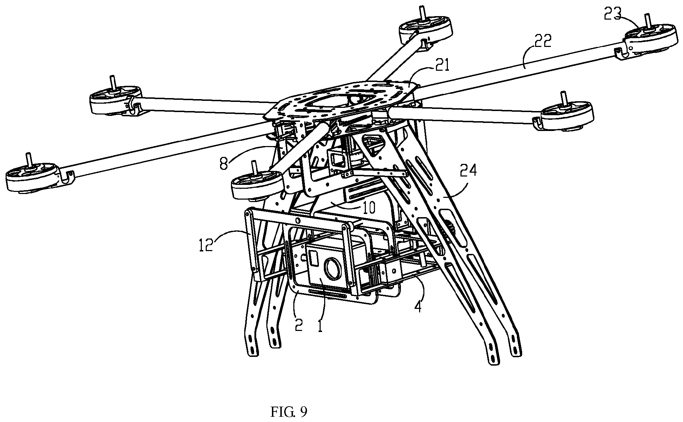

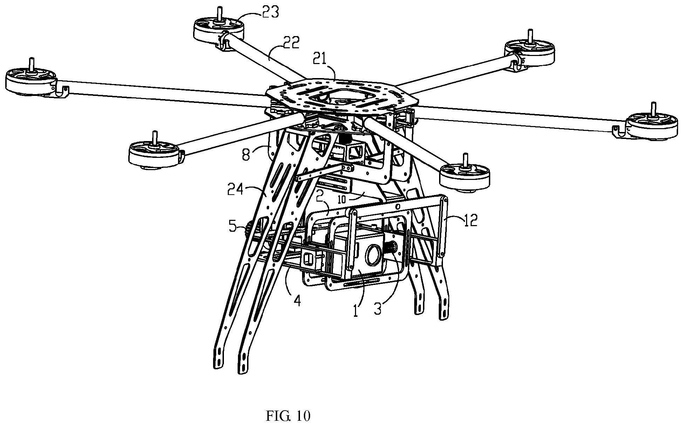

In a further embodiment as shown in Fig.7-Fig.10, the present disclosure provides a multi-rotor aircraft, comprising the triple-axis platform 100 for use in an unmanned aerial vehicle, a multi-rotor mounting frame 200 and a circuit device. The multi-rotor mounting frame 200 comprises a base 21, at least three support arms 22 inserted and fixed on the base 21, a rotor member 23 fixed at one end of the support arm 22, and a plurality of support frames 24 which are arranged extending along the base 21 and used for positioning externally. Noticeably, the number of the support arms 22 is not limited to three as shown in the figures, and it may be four, six or eight. The support arms 22 may be fixed on the base 21 by insertion connection, welding, threaded connection or riveting. The triple-axis platform 100 for use in an unmanned aerial vehicle is fixedly arranged at the base 21 through the connecting frame 8.

Noticeably, the triple-axis platform 100 of the multi-rotor aircraft employs the structure of the triple-axis platform for use in an unmanned aerial vehicle provided in embodiment 2, which is not detailed here. For particulars, please refer to the preceding depictions.

### Embodiment 4

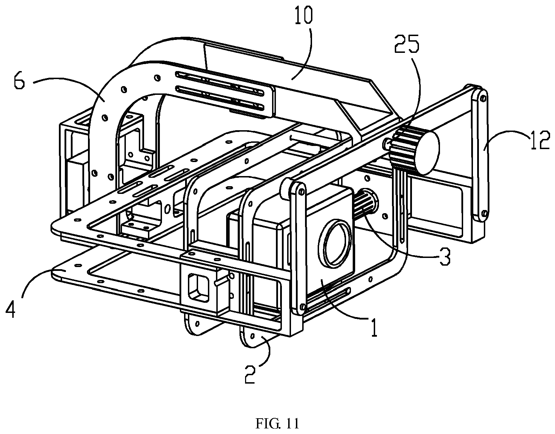

In an embodiment shown in Fig. 11, the present disclosure provides a platform for use in an unmanned aerial vehicle. The platform is a dual-axis platform comprising a machine frame assembly, a transmission assembly and a shooting assembly 1. The machine frame assembly comprises a first bracket 2, a second bracket 4, a third bracket 6 and a linkage member 12, the shooting assembly is fixed on the first bracket 2, the first bracket 2 is rotatably arranged with the second bracket 4, the second bracket 4 is rotatably arranged with the third bracket 6, and the linkage member 12 and the second bracket 4 form a four-link mechanism. The transmission assembly comprises a first motor 3 and a fourth motor 25, wherein the first motor 3 directly drives the first bracket 2 to rotate relative to the second bracket 4. Different from Embodiment 1, Embodiment 2 and Embodiment 3, the fastener 13 is replaced by the fourth motor 25 which directly drives the linkage member 12 to bring the second bracket 4 to rotate relative to the third bracket 6, rather than the fact that the second motor 25 directly drives the fourth bracket 4 as in Embodiment 1, Embodiment 2 and Embodiment 3. In the present disclosure, the linkage member 12 and the second bracket 4 form a four-link mechanism, the fourth motor 25 which directly drives the linkage member 12 to bring the second bracket 4 to rotate relative to the third bracket 6, the linkage member 12 and the second bracket 4 rotate the same angle without interfering with the movement trajectory of the second bracket 4; meanwhile the linkage member 12 provides effective support for the two open ends of the second bracket 4 in a vertical direction, increases the load and rigidity of the second bracket 4, effectively reduces deformation quantity, and decreases the self weight of the second bracket 4.

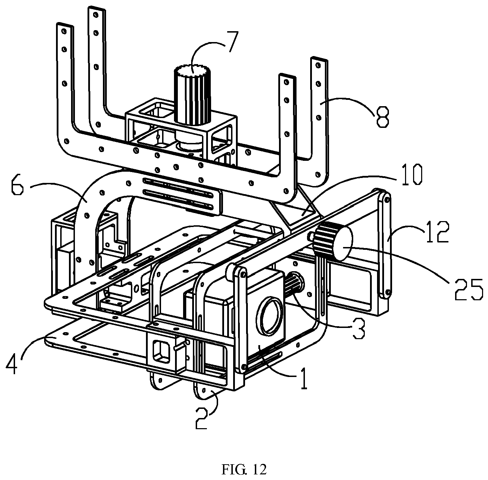

In a further embodiment as shown in Fig. 12, the present disclosure provides a triple-axis platform. Different from the dual-axis platform as described in Fig.11, the machine frame assembly of the platform for use in the unmanned aerial vehicle further comprises a connecting frame 8 for external mounting, the transmission assembly further comprises a third motor 7; the third motor 7 drives the third bracket 6 to rotate relative to the connecting frame 8. To allow circumferential rotation of the shooting assembly 1 to perform rotatable shooting in a range of 360 degrees, the connecting frame 8 is fixed externally to a helicopter or a multi-rotor aircraft, and the third bracket 6 may rotate about a Z axis relative to the connecting frame 8.

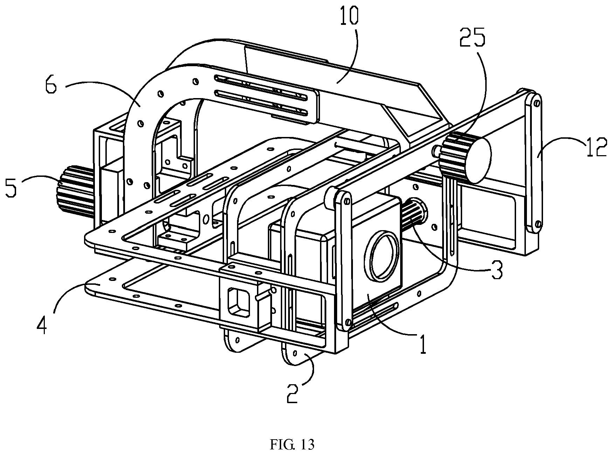

In a further embodiment as shown in Fig.13, the present disclosure provides a dual-axis platform for use in an unmanned aerial vehicle. Different from the platform as described in Fig.11, the transmission assembly of the platform for use in an unmanned aerial vehicle further comprises a second motor 5 which directly drives the second bracket 4 to rotate relative to the third bracket 6. The second motor 5 may serve as an auxiliary power source and drive the second bracket 4 in cooperation with the fourth motor 25. Since the linkage member 12 and the second bracket 4 form a four-link mechanism, the second motor 5 and the fourth motor 24 are used in cooperation to synchronously drive the second bracket 4 to rotate. It may be understood that the second motor 5 and the fourth motor 25 may individually drive the second bracket 5 to rotate.

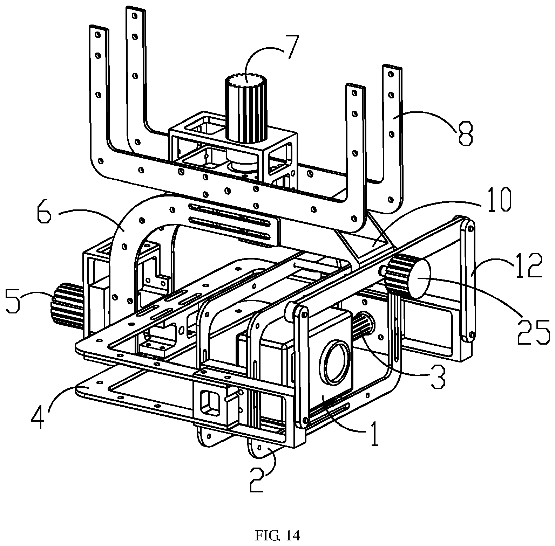

In a further embodiment as shown in Fig. 14, the present disclosure provides a triple-axis platform for use in an unmanned aerial vehicle. Different from the platform as described in Fig.13, the machine frame assembly of the platform for use in the unmanned aerial vehicle further comprises a connecting frame 8 for external mounting, the transmission assembly further comprises a third motor 7; the third motor 7 drives the third bracket 6 to rotate relative to the connecting frame 8. To allow circumferential rotation of the shooting assembly 1 to perform rotatable shooting in a range of 360 degrees, the connecting frame 8 is fixed externally to a helicopter or a multi-rotor aircraft, and the third bracket 6 may rotate about a Z axis relative to the connecting frame 8.

In the platform of Embodiment 4 of the present disclosure, the linkage member 12 and the second bracket 4 form a four-link mechanism, the fourth motor 25 directly drives the linkage member 12 to bring the second bracket 4 to rotate relative to the third bracket 6, the linkage member 12 and the second bracket 4 rotate the same angle without interfering with the movement trajectory of the second bracket 4; meanwhile the linkage member 12 provides effective support for the two open ends of the second bracket 4 in a vertical direction, increases the load and rigidity of the second bracket 4, effectively reduces deformation quantity, and decreases the self weight of the second bracket 4. Meanwhile, the motor, as the power source, is directly connected to the machine frame assembly of the platform, thereby consuming less energy and saving electrical energy; meanwhile, motor driving can achieve indefinitely variable adjustment, the motor has a shorter action response time and can quickly start, stop or adjust the magnitude of the rotation speed timely to adapt for various flying postures of the unmanned aerial vehicle so as to improve the shooting stability of the shooting assembly.

The above only describes preferred embodiments of the present disclosure with reference to figures. The protection scope of the present invention is not limited to the above specific embodiments. The above specific embodiments are only illustrative not restrictive. As suggested by the present disclosure, those having ordinary skill in the art, without departure from the essence of the present invention and the scope defined by appended claims, may devise many forms, which all fall within the scope of the present invention.

## Claims

1. A platform for use in an unmanned aerial vehicle, comprising a machine frame assembly and a transmission assembly, wherein:
the machine frame assembly comprises a first bracket (2), a second bracket (4), a third bracket (6) and a connecting frame (8) for external mounting, wherein the first bracket (2) is configured to support a shooting assembly (1) affixed thereto, and wherein the first bracket (2) is rotatably arranged with the second bracket (4), and the second bracket (4) is rotatably arranged with the third bracket (6); and
the transmission assembly comprises a first motor (3), a second motor (5) and a third motor (7);
**characterized in that** the first motor (3) directly drives the first bracket (2) to rotate relative to the second bracket (4), the second motor (5) directly drives the second bracket (4) to rotate relative to the third bracket (6), and the third motor (7) directly drives the third bracket (6) to rotate relative to the connecting frame (8);
and
(i) a stator of the first motor (3) is fixed on the first bracket (2), and a rotor of the first motor (3) is fixedly arranged with the second bracket (4); and
(ii) a stator of the second motor (5) is fixed on the third bracket (6), and a rotor of the second motor (5) is fixedly arranged with the second bracket (4).

2. The platform for use in an unmanned aerial vehicle according to claim 1, **characterized in that** it further comprises a linkage member (12) connecting an open end of the second bracket (4) with the third bracket (6).

3. The platform for use in an unmanned aerial vehicle according to claim 2, **characterized in that**, the linkage member (12) comprises a first link (121), a second link (122) and a third link (123) hingedly connected sequentially; one free end of the first link (121) is hingedly arranged at one end of the second bracket (4), one free end of the third link (123) is hingedly arranged at the other end of the second bracket (4); a middle portion of the second link (122) is positioned on the third bracket (6) via a fastener (13).

4. The platform for use in an unmanned aerial vehicle according to claim 3, **characterized in that**, it further comprises a mounting arm (10), wherein one end of the mounting arm (10) is fixed on the third bracket (6), and the other end is provided with a positioning hole (11) adapted for the fastener (13), and wherein the second link (122) is fixed on the mounting arm (10) via the fastener (13).

5. The platform for use in an unmanned aerial vehicle of claim 2 **characterized in that**:
the transmission assembly further comprises a fourth motor (25), wherein the fourth motor (25) directly drives the linkage member (12) to thereby bring the second bracket (4) into rotation relative to the third bracket (6).

6. The platform for use in an unmanned aerial vehicle according to claim 5, **characterized in that**, the linkage member (12) comprises a first link (121), a second link (122) and a third link (123) hingedly connected sequentially; one free end of the first link (121) is hingedly arranged at one end of the second bracket (4), one free end of the third link (123) is hingedly arranged at the other end of the second bracket (4); the second link (122) is positioned on the third bracket (6) via the fourth motor (25).

7. The platform for use in an unmanned aerial vehicle according to claim 6, further comprising a mounting arm (10), wherein one end of the mounting arm (10) is fixed on the third bracket (6), and the other end is fixedly connected to a stator of the fourth motor (25); a rotor of the fourth motor (25) is fixedly connected to the second link (122);
or, one end of the mounting arm (10) is fixed on the third bracket (6), and the other end is fixedly connected to the rotor of the fourth motor (25); the stator of the fourth motor (25) is fixedly connected to the second link (122).

8. The platform for use in an unmanned aerial vehicle according to claim 6, **characterized in that**, the second bracket (4) is in an open "U" shape, and one free end of the first link (121) and one free end of the third link (123) are respectively rotatably arranged at two open ends of the second bracket (4).

9. The platform for use in an unmanned aerial vehicle according to claim 1, **characterized in that**, the center of gravity of the first bracket (2) and the shooting assembly (1) falls on a rotation axis of the first bracket (2).

10. The platform for use in an unmanned aerial vehicle according to claim 1, **characterized in that**, the center of gravity of the first bracket (2), the second bracket (4) and the shooting assembly (1) as a whole falls on a rotation axis of the second bracket (4).

11. The platform for use in an unmanned aerial vehicle according to claim 1, **characterized in that**, the center of gravity of the first bracket (2), the second bracket (4), the third bracket (6) and the shooting assembly (1) as a whole falls on a rotation axis of the third bracket (4).

12. The platform for use in an unmanned aerial vehicle according to claim 1, **characterized in that**, the transmission assembly further comprises an inertia sensor that monitors postures of the unmanned aerial vehicle timely and dynamically.

13. The platform for use in an unmanned aerial vehicle accordingly to claim 12, **characterized in that**, the inertia sensor comprises a gyro for detecting an angular speed signal and an accelerometer for detecting an acceleration signal.

14. The platform for use in an unmanned aerial vehicle according to claim 12, **characterized in that**, the transmission assembly further comprises a multiprocessor, wherein the multiprocessor controls positive rotation, reverse rotation and magnitude of rotation speed of the first motor and the second motor according to a signal from the inertia sensor.

15. A multi-rotor aerial vehicle, **characterized in that** it comprises the platform (100) for use in an unmanned aerial vehicle according to any one of claims 1 to 14, a multi-rotor mounting frame (200) and circuit elements, the multi-rotor mounting frame (200) comprises a base (21), at least three support arms (22) connected to the base (21), a rotor member (23) supported by each support arm (22), and a plurality of support frames (24) which are arranged extending along the base (21) and used for positioning externally; the platform (100) for use in an unmanned aerial vehicle is fixedly arranged at the base (21) through the connecting frame (8).

## Patentansprüche

1. Plattform zur Verwendung in einem unbemannten Flugkörper, die eine Maschinengestellanordnung und eine Getriebeanordnung umfasst, wobei:
die Maschinengestellanordnung eine erste Halterung (2), eine zweite Halterung (4), eine dritte Halterung (6) und ein Verbindungsgestell (8) zur externen Befestigung umfasst, wobei die erste Halterung (2) konfiguriert ist, eine daran angebrachte Aufnahmevorrichtung (1) zu stützen, und wobei die erste Halterung (2) drehbar mir der zweiten Halterung (4) angeordnet ist und die zweite Halterung (4) drehbar mit der dritten Halterung (6) angeordnet ist; und
die Getriebeanordnung einen erstem Motor (3), einen zweiten Motor (5) und einen dritten Motor (7) umfasst;
**dadurch gekennzeichnet, dass** der erste Motor (3) die zweite Halterung (2) zum Drehen relativ zu der zweiten Halterung (4) direkt antreibt, der zweite Motor (5) die zweite Halterung (4) zum Drehen relativ zu der dritten Halterung (6) direkt antreibt und der dritte Motor (7) die dritte Halterung (6) zum Drehen relativ zu dem Verbindungsgestell (8) direkt antreibt;
und wobei
(i) ein Stator des ersten Motors (3) auf der ersten Halterung (2) befestigt ist und ein Rotor des ersten Motors (3) fest mit der zweiten Halterung (4) angeordnet ist; und
(ii) ein Stator des zweiten Motors (5) auf der dritten Halterung (6) befestigt ist und ein Rotor des zweiten Motors (5) unbeweglich mit der zweiten Halterung (4) angeordnet ist.

2. Plattform zur Verwendung in einem unbemannten Flugkörper nach Anspruch 1, **dadurch gekennzeichnet, dass** sie ferner ein Verbindungselement (12) umfasst, das ein offenes Ende der zweiten Halterung (4) mit der dritten Halterung (6) verbindet.

3. Plattform zur Verwendung in einem unbemannten Flugkörper nach Anspruch 2, **dadurch gekennzeichnet, dass** das Verbindungselement (12) eine erste Verbindung (121), eine zweite Verbindung (122) und eine dritte Verbindung (123) umfasst, die sequenziell drehbar verbunden sind; ein freies Ende der ersten Verwendung (121) drehbar an einem Ende der zweiten Halterung (4) angeordnet ist, ein freies Ende der dritten Verbindung (123) drehbar an dem anderen Ende der zweiten Halterung (4) angeordnet ist; ein mittlerer Abschnitt der zweiten Verbindung (122) über ein Befestigungselement (13) auf der dritten Halterung (6) positioniert ist.

4. Plattform zur Verwendung in einem unbemannten Flugkörper nach Anspruch 3, **dadurch gekennzeichnet, dass** sie ferner einen Befestigungsarm (10) umfasst, wobei ein Ende des Befestigungsarms (10) auf der dritten Halterung (6) befestigt ist und das andere Ende mit einem Positionierungsloch (11) versehen ist, das auf das Befestigungselement (13) angepasst ist, und wobei die zweite Verbindung (122) über das Befestigungselement (13) auf dem Befestigungsarm (10) befestigt ist.

5. Plattform zur Verwendung in einem unbemannten Flugkörper nach Anspruch 2, **dadurch gekennzeichnet, dass**:
die Getriebeanordnung ferner einen vierten Motor (25) umfasst, wobei der vierte Motor (25) das Verbindungselement (12) direkt antreibt, um dadurch die zweite Halterung (4) in Drehung relativ zu der dritten Halterung (6) zu versetzen.

6. Plattform zur Verwendung in einem unbemannten Flugkörper nach Anspruch 5, **dadurch gekennzeichnet, dass** das Verbindungselement (12) eine erste Verbindung (121), eine zweite Verbindung (122) und eine dritte Verbindung (123) umfasst, die sequenziell drehbar verbunden sind; ein freies Ende der ersten Verwendung (121) drehbar an einem Ende der zweiten Halterung (4) angeordnet ist, ein freies Ende der dritten Verbindung (123) drehbar an dem anderen Ende der zweiten Halterung (4) angeordnet ist; die zweite Verbindung (122) über den vierten Motor (25) auf der dritten Halterung (6) positioniert ist.

7. Plattform zur Verwendung in einem unbemannten Flugkörper nach Anspruch 6, die ferner einen Befestigungsarm (10) umfasst, wobei ein Ende des Befestigungsarms (10) auf der dritten Halterung (6) befestigt ist und das andere Ende unbeweglich mit einem Stator des vierten Motors (25) verbunden ist; ein Rotor des vierten Motors (25) unbeweglich mit der zweiten Verbindung (122) verbunden ist;
oder wobei ein Ende des Befestigungsarms (10) auf der dritten Halterung (6) befestigt ist und das andere Ende unbeweglich mit dem Rotor des vierten Motors (25) verbunden ist; wobei der Rotor des vierten Motors (25) unbeweglich mit der zweiten Verbindung (122) verbunden ist.

8. Plattform zur Verwendung in einem unbemannten Flugkörper nach Anspruch 6, **dadurch gekennzeichnet, dass** die zweite Halterung (4) eine offene "U"-Form aufweist und ein freies Ende der ersten Verbindung (121) und ein freies Ende der dritten Verbindung (123) jeweils an zwei offenen Enden der zweiten Halterung (4) drehbar angeordnet sind.

9. Plattform zur Verwendung in einem unbemannten Flugkörper nach Anspruch 1, **dadurch gekennzeichnet, dass** der Schwerpunkt der ersten Halterung (2) und der Aufnahmevorrichtung (1) auf einer Drehachse der ersten Halterung (2) liegt.

10. Plattform zur Verwendung in einem unbemannten Flugkörper nach Anspruch 1, **dadurch gekennzeichnet, dass** der Schwerpunkt der ersten Halterung (2), der zweiten Halterung (4) und der Aufnahmevorrichtung (1) im Ganzen auf einer Drehachse der zweiten Halterung (4) liegt.

11. Plattform zur Verwendung in einem unbemannten Flugkörper nach Anspruch 1, **dadurch gekennzeichnet, dass** der Schwerpunkt der ersten Halterung (2), der zweiten Halterung (4), der dritten Halterung (6) und der Aufnahmevorrichtung (1) im Ganzen auf einer Drehachse der dritten Halterung (4) liegt.

12. Plattform zur Verwendung in einem unbemannten Flugkörper nach Anspruch 1, **dadurch gekennzeichnet, dass** die Getriebeanordnung ferner einen Trägheitssensor umfasst, der Stellungen des unbemannten Flugkörpers zeitnah und dynamisch überwacht.

13. Plattform zur Verwendung in einem unbemannten Flugkörper nach Anspruch 12, **dadurch gekennzeichnet, dass** der Trägheitssensor ein Gyroskop zum Erfassen eines Winkelgeschwindigkeitssignals und einen Beschleunigungsmesser zum Erfassen eines Beschleunigungssignals umfasst.

14. Plattform zur Verwendung in einem unbemannten Flugkörper nach Anspruch 12, **dadurch gekennzeichnet, dass** die Getriebeanordnung ferner einen Multiprozessor umfasst, wobei der Multiprozessor positive Drehung, Rückwärtsdrehung und Drehgeschwindigkeitsstärke des ersten Motors und des zweiten Motors gemäß einem Signal von dem Trägheitssensor steuert.

15. Flugkörper mit mehreren Rotoren, **dadurch gekennzeichnet, dass** er die Plattform (100) zur Verwendung in einem unbemannten Flugkörper nach einem der Ansprüche 1 bis 14, ein Befestigungsgestell für mehrere Rotoren (200) und Schaltungselemente umfasst, wobei das Befestigungsgestell für mehrere Rotoren (200) eine Basis (21), mindestens drei Tragarme (22), die mit der Basis (21) verbunden sind, ein Rotorelement (23), das von jedem Tragarm (22) getragen wird, und mehrere Tragrahmen (24), die sich entlang der Basis (21) erstreckend angeordnet sind und zur externen Positionierung verwendet werden, umfasst; wobei die Plattform (100) zur Verwendung in einem unbemannten Flugkörper durch das Verbindungsgestell (8) unbeweglich an der Basis (21) angeordnet ist.

## Revendications

1. Plate-forme pour une utilisation dans un aéronef sans pilote, comprenant un ensemble cadre de machine et un ensemble transmission, dans lequel :
l'ensemble cadre de machine comprend une première console (2), une deuxième console (4), une troisième console (6) et un cadre de raccordement (8) pour un montage externe, la première console (2) étant configurée de façon à soutenir un ensemble de prise de vues (1) qui y est assujetti, et la première console (2) étant agencée de manière rotative avec la deuxième console (4), et la deuxième console (4) étant agencée de manière rotative avec la troisième console (6) ; et
l'ensemble transmission comprend un premier moteur (3), un deuxième moteur (5) et un troisième moteur (7) ;
**caractérisée en ce que** le premier moteur (3) entraîne directement la première console (2) pour tourner par rapport à la deuxième console (4), le deuxième moteur (5) entraîne directement la deuxième console (4) pour tourner par rapport à la troisième console (6), et le troisième moteur (7) entraîne directement la troisième console (6) pour tourner par rapport au cadre de raccordement (8) ;
et
(i) un stator du premier moteur (3) est fixé sur la première console (2), et un rotor du premier moteur (3) est agencé de manière fixe avec la deuxième console (4) ; et
(ii) un stator du deuxième moteur (5) est fixé sur la troisième console (6), et un rotor du deuxième moteur (5) est agencé de manière fixe avec la deuxième console (4).

2. Plate-forme pour une utilisation dans un aéronef sans pilote selon la revendication 1, **caractérisée en ce qu'**elle comprend en outre un élément d'articulation (12) lequel raccorde une extrémité ouverte de la deuxième console (4) avec la troisième console (6).

3. Plate-forme pour une utilisation dans un aéronef sans pilote selon la revendication 2, **caractérisée en ce que** l'élément d'articulation (12) comprend une première tringle (121), une deuxième tringle (122) et une troisième tringle (123) raccordées séquentiellement de manière articulée ; une extrémité libre de la première tringle (121) étant agencée de manière articulée au niveau d'une extrémité de la deuxième console (4), une extrémité libre de la troisième tringle (123) étant agencée de manière articulée au niveau de l'autre extrémité de la deuxième console (4) ; une portion centrale de la deuxième tringle (122) étant positionnée sur la troisième console (6) par l'intermédiaire d'un dispositif de fixation (13).

4. Plate-forme pour une utilisation dans un aéronef sans pilote selon la revendication 3, **caractérisée en ce qu'**elle comprend en outre un bras de montage (10), une extrémité du bras de montage (10) étant fixée sur la troisième console (6), et l'autre extrémité étant munie d'un trou de positionnement (11) conçu pour le dispositif de fixation (13), et la deuxième tringle (122) étant fixée sur le bras de montage (10) par l'intermédiaire du dispositif de fixation (13).

5. Plate-forme pour une utilisation dans un aéronef sans pilote selon la revendication 2, **caractérisée en ce que** :
l'ensemble transmission comprend en outre un quatrième moteur (25), le quatrième moteur (25) entraînant directement l'élément d'articulation (12) pour amener ainsi la deuxième console (4) en rotation par rapport à la troisième console (6).

6. Plate-forme pour une utilisation dans un aéronef sans pilote selon la revendication 5, **caractérisée en ce que** l'élément d'articulation (12) comprend une première tringle (121), une deuxième tringle (122) et une troisième tringle (123) raccordées séquentiellement de manière articulée ; une extrémité libre de la première tringle (121) étant agencée de manière articulée au niveau d'une extrémité de la deuxième console (4), une extrémité libre de la troisième tringle (123) étant agencée de manière articulée au niveau de l'autre extrémité de la deuxième console (4) ; la deuxième tringle (122) étant positionnée sur la troisième console (6) par l'intermédiaire du quatrième moteur (25).

7. Plate-forme pour une utilisation dans un aéronef sans pilote selon la revendication 6, comprenant en outre un bras de montage (10), une extrémité du bras de montage (10) étant fixée sur la troisième console (6), et l'autre extrémité étant raccordée de manière fixe à un stator du quatrième moteur (25) ; un rotor du quatrième moteur (25) étant raccordé de manière fixe à la deuxième tringle (122) ;
ou, une extrémité du bras de montage (10) étant fixée sur la troisième console (6), et l'autre extrémité étant raccordée de manière fixe au rotor du quatrième moteur (25) ; le stator du quatrième moteur (25) étant raccordé de manière fixe à la deuxième tringle (122).

8. Plate-forme pour une utilisation dans un aéronef sans pilote selon la revendication 6, **caractérisée en ce que** la deuxième console (4) se présente en une forme ouverte en « U », et une extrémité libre de la première tringle (121) et une extrémité de la troisième tringle (123) étant agencées respectivement de manière rotative au niveau de deux extrémités ouvertes de la deuxième console (4).

9. Plate-forme pour une utilisation dans un aéronef sans pilote selon la revendication 1, **caractérisée en ce que** le centre de gravité de la première console (2) et l'ensemble prise de vues (1) tombe sur un axe de rotation de la première console (2).

10. Plate-forme pour une utilisation dans un aéronef sans pilote selon la revendication 1, **caractérisée en ce que** le centre de gravité de la première console (2), de la deuxième console (4) et de l'ensemble prise de vues (1) en tant qu'ensemble tombe sur un axe de rotation de la deuxième console (4).

11. Plate-forme pour une utilisation dans un aéronef sans pilote selon la revendication 1, **caractérisée en ce que** le centre de gravité de la première console (2), de la deuxième console (4), de la troisième console (6) et de l'ensemble prise de vues (1) en tant qu'ensemble tombe sur un axe de rotation de la troisième console (4).

12. Plate-forme pour une utilisation dans un aéronef sans pilote selon la revendication 1, **caractérisée en ce que** l'ensemble transmission comprend en outre un capteur d'inertie qui surveille les postures de l'aéronef sans pilote de manière opportune et dynamique.

13. Plate-forme pour une utilisation dans un aéronef sans pilote en conformité avec la revendication 12, **caractérisée en ce que** le capteur d'inertie comprend un gyroscope pour détecter un signal de vitesse angulaire et un accéléromètre pour détecter un signal d'accélération.

14. Plate-forme pour une utilisation dans un aéronef sans pilote selon la revendication 12, **caractérisée en ce que** l'ensemble transmission comprend en outre un multiprocesseur, le multiprocesseur contrôlant la rotation positive, la rotation inverse et l'ampleur de la vitesse de rotation du premier moteur et du deuxième moteur en fonction d'un signal en provenance du capteur d'inertie.

15. Aéronef multi-rotors, **caractérisé en ce qu'**il comprend la plate-forme (100) pour une utilisation dans un aéronef sans pilote selon l'une quelconque des revendications 1 à 14, un cadre de montage multi-rotors (200) et des éléments de circuit, le cadre de montage multi-rotors (200) comprenant un socle (21), au moins trois bras de support (22) raccordés au socle (21), un élément rotor (23) soutenu par chaque bras de support (22), et une pluralité de cadres de support (24) qui sont agencés en prolongement le long du socle (21) et utilisés pour un positionnement à l'extérieur ; la plate-forme (100) pour une utilisation dans un aéronef sans pilote étant agencée de manière fixe au niveau du socle (21) à travers le cadre de raccordement (8).
